# EUROPÄISCHE PATENTANMELDUNG

(11) **EP 3 995 272 A1**
(43) Veröffentlichungstag der Anmeldung: **11.05.2022**
(21) Anmeldenummer: 20206156.0
(22) Anmeldetag: 06.11.2020
(51) Int. Cl.: B26F 3/02, B26D 1/00

(54) **ABTRENN-, KASCHIER- UND GLASPLATTENHERSTELLVORRICHTUNG SOWIE VERFAHREN ZUM ABTRENNEN EINER FOLIE UND KASCHIERVERFAHREN**

(71) Anmelder: PSA Technology S.à.r.l., 6430 Echternach (LU)
(72) Erfinder: MOELTER, Thomas, 54608 Bleialf (DE); DIEDERICHS, Ludwig, 54570 Kalenborn-Scheuern (DE)
(74) Vertreter: Patentanwälte Olbricht Buchhold Keulertz

(57) **Zusammenfassung**

Die Erfindung betrifft eine Abtrennvorrichtung (1) mit einer Plattenaufnahme (2) zur Aufnahmen einer Platte (100) in einer Aufnahmeebene (E), einem Linearantrieb (3), der beabstandet zur Plattenaufnahme (2) angeordnet und dessen Bewegungsrichtung (X) zumindest im Wesentlichen parallel zur Plattenaufnahme (2) ausgerichtet ist; und einem ersten Werkzeug (10), das über eine Andrückeinheit (30) derart bewegbar an dem Linearantrieb (3) gelagert ist, dass es in Richtung der Aufnahmeebene (E) belastbar und/oder belastet ist. Dabei hat das erste Werkzeug (10) eine Andrückfläche (11), die schräg zur Aufnahmeebene (E) ausgerichtet ist. Zudem werden eine Kaschiervorrichtung, eine Glasplattenherstellvorrichtung und Verfahren zum Kaschieren und Abtrennen von Folie angegeben.

## Beschreibung

Die Erfindung betrifft eine Abtrennvorrichtung gemäß Anspruch 1, eine Kaschiervorrichtung nach Anspruch 12 hiermit, eine Glasplattenherstellvorrichtung gemäß Anspruch 13 hiermit sowie ein Verfahren zum Abtrennen einer auf einer Platte aufkaschierten Folie nach Anspruch 14 und ein Verfahren zum Aufkaschieren einer Folie auf eine Platte nach Anspruch 17.

Bei der Herstellung von kontinuierlich hergestelltem Floatglas, wird das entstehende und oftmals über 3 m breite Glasband mittels einer Fördereinrichtung von dem Floatbad (typischerweise ein Zinnbad) weggefördert. Entlang der Fördereinrichtung wird das Glasband dann abgelängt, was beispielsweise durch Anritzen und Brechen gelingt. Nachdem das Glasband oder die einzelnen Platten entlang der Fördereinrichtung durch Temperierung und ggf. Beschichtungsverfahren veredelt wurden, werden Schutzfolien aufkaschiert, insbesondere als temporärer Schutz für den Transport und die Weiterverarbeitung.

Diese Schutzfolien sind nach dem Aufbringen am Rand der Glasplatten abzuschneiden. So ist beispielsweise aus EP 2 087 971 A2 eine Schneidvorrichtung zum Beschneiden eines überstehenden Umfangsabschnitts einer flexiblen Schicht einer Verbundsicherheitsscheibe bekannt. Als Werkzeug für das Beschneiden kommt hier ein oszillierendes Schneidmesser zum Einsatz, dessen Klingenausrichtung und Bewegungsrichtung senkrecht zur Scheibe ausgerichtet sind. Beim Schnitt entlang des Umfangs der Scheibe verbleibt ein schmaler Überstand der Folie. Dieser erweist sich in der Praxis als hinderlich bei der automatisierten Weiterbearbeitung, die oftmals eine präzise Positionsbestimmung der Scheibe verlangt. Vor allem optische Sensoren detektieren anstatt des Scheibenrandes den überstehenden Folienrand und es kommt zu Fehlpositionierungen.

DE 29 48 773 A1 nutzt ebenfalls ein Messer zum Abschneiden einer Folie, die auf ein Trägermaterial kaschiert ist und seitlich über dieses Trägermaterial hinaussteht. Das Messer ist senkrecht zur Trägerplatte ausgerichtet und wird mittels einer Feder flach an den Rand des Trägermaterials angedrückt. Durch eine Relativbewegung zwischen dem Messer und dem Trägermaterial wird die Folie entlang dem Rand abgeschnitten. Dies funktioniert jedoch nur mit Verpackungsmaterial, das so weich ist, dass es die Schneidkante des Messers nicht schädigt.

Die EP 0 517 176 B2 beschreibt, wie eine Folie im Randbereich einer Scheibe durch das Aufsetzen eines Schleifwerkzeugs von oben auf die Platte abgetragen wird. Das ist sehr aufwendig, langsam und geht mit erheblichem Werkzeugverschleiß einher. Zudem wird die Oberfläche der Glasplatte im Schleifbereich beschädigt. Für die nachfolgenden Arbeitsschritte stellen die entstehenden Schleifpartikel zudem eine erhebliche Herausforderung dar. Bei der kontinuierlichen Glasherstellung ist auch der Zeitaufwand für die Entfernung der Folie so hoch, dass große Pufferabstände zwischen zu bearbeitenden Platten einzuplanen sind, was entsprechend erheblichen Fertigungsplatz benötigt.

Aufgabe der Erfindung ist es deshalb, ein Entfernen eines Folienüberstands von einer Glasscheibe möglichst präzise am Rand zu ermöglichen, das möglichst komfortabel, zuverlässig, schnell und kostengünstig gelingt.

Hauptmerkmale der Erfindung sind in den Ansprüchen 1, 12, 13, 14 und 17 angegeben. Ausgestaltungen sind Gegenstand der Ansprüche 2 bis 11 und 15 bis 16.

Die Erfindung betrifft eine Abtrennvorrichtung mit einer Plattenaufnahme zur Aufnahmen einer Platte in einer Aufnahmeebene, wobei die Platte insbesondere eine aufkaschierte Folie aufweist, die bis über eine Kante der Platte hinausragt, mit einem Linearantrieb, der beabstandet zur Plattenaufnahme angeordnet und dessen Bewegungsrichtung zumindest im Wesentlichen parallel oder exakt parallel zur Plattenaufnahme ausgerichtet ist, und mit einem ersten Werkzeug, das über eine Andrückeinheit derart bewegbar an dem Linearantrieb gelagert ist, dass es in Richtung der Aufnahmeebene belastbar bzw. beaufschlagbar und/oder belastet ist (vorzugsweise mit einem definierten und zumindest im Wesentlichen konstanten Anpressdruck (P)). Dabei weist das erste Werkzeug eine Andrückfläche auf, die schräg zur Aufnahmeebene ausgerichtet ist, insbesondere derart, dass die Andrückfläche mit dem Linearantrieb schräg und tangential an der Kante der Platte entlangfahrbar ist.

Vorteilhaft hieran ist, dass nicht eine verschleißanfällige, werkzeugseitige Schneide notwendig ist, sondern man sich der Kantenschärfe der Platte bedient. Damit entsteht kaum werkzeugseitiger Verschleiß. Gleichzeitig gelingt der Schnitt stets exakt an der Kante der Platte. Der Vorgang des Entlangfahrens ist zudem schnell und funktioniert zuverlässig. Entsprechend sind in folgenden Verarbeitungsanlagen auch problemlos optische Erfassungen der Position der Platte und deren Kante möglich. Insbesondere in der Glasfertigung sind zudem die Kanten der Glasplatten noch frisch und eignen sich damit besonders gut als Gegenstück der Andrückfläche. Für eine zuverlässige Durchtrennung der Folie sollte die Andrückfläche des ersten Werkzeugs einen Winkel zur Aufnahmeebene ausbilden, der zwischen 25 Gad und 65 Grad, vorzugsweise zwischen 30 Grad und 60 Grad, weiter bevorzugt zwischen 35 Grad und 55 Grad und besonders bevorzugt zwischen 40 Grad und 50 Grad beträgt.

Gemäß einer besonderen Ausführungsform ist das erste Werkzeug eine um eine erste Drehachse drehbar gelagerte erste Rolle, wobei die schräge Andrückfläche die Mantelfläche der ersten Rolle ist. Durch das Abrollen wird ein Verschieben der Folie auf der Platte vermieden und die Andrückfläche wird wesentlich weniger von der Kante der Platte verschlissen.

Optional ist die Mantelfläche der ersten Rolle kegelförmig ausgebildet, d.h. insbesondere mit einer konstanten Neigung. Eine ebene Andrückfläche, wie sie auch durch die Kegelform bereitstellbar ist, hat den Vorteil, dass der Anstellwinkel auf der Kante gleichbleibt, selbst wenn die Platte etwas schräg zum Linearantrieb ausgerichtet ist. Dann wandert der Tangentialpunkt bzw. die Tangentiallinie etwas auf der Andrückfläche, ohne dass sich die schnittrelevanten Parameter ändern.

In einer bevorzugten Ausgestaltung ist der Rand der kegelförmigen ersten Rolle im Bereich des größten Durchmessers der ersten Rolle stumpf ausgeführt, und weist vorzugsweise eine Entgratung und/oder eine Fase und/oder einen Radius auf. Damit wird verhindert, dass dieser Rand der Rolle durch die Folie hindurchdringt oder gar einen zusätzlichen Schnitt beabstandet zur Kante der Platte durchführt. Damit geht auch der Vorteil einher, dass die Folie über den Rand der Rolle gespannt werden kann und der Schnitt an der Kante zuverlässig gelingt.

Im Speziellen kann die erste Drehachse zumindest im Wesentlichen parallel zur Aufnahmeebene ausgerichtet sein. Damit ist der in der Horizontalen notwendige Platzbedarf gering, und es könnte bspw. eine benachbarte weitere Platte gleichzeitig bearbeitet werden.

Bei einer Ausführungsform der Abtrennvorrichtung ist vorgesehen, dass zumindest die schräge Andrückfläche des ersten Werkzeugs aus einem Metall, vorzugsweise aus einem gehärteten Stahl, besteht. Damit unterliegt die Andrückfläche auch bei harten Plattenmaterialien nur einem geringen Verschleiß. So ist es insbesondere auch möglich, dass die erste Rolle aus einem Metall, vorzugsweise aus einem gehärteten Stahl, besteht.

Gemäß einer besonderen Weiterbildung der Abtrennvorrichtung ist ein zweites Werkzeug derart über die Andrückeinheit an dem Linearantrieb gelagert, dass es in Richtung der Aufnahmeebene belastbar bzw. beaufschlagbar und/oder belastet ist (vorzugsweise mit einem definierten und zumindest im Wesentlichen konstanten Anpressdruck), wobei das zweite Werkzeug eine Andrückfläche aufweist, die schräg zur Aufnahmeebene ausgerichtet ist, insbesondere derart, dass diese Andrückfläche mit dem Linearantrieb schräg und tangential an einer Kante einer weiteren Platte entlangfahrbar ist, wobei die Andrückfläche des zweiten Werkzeugs umgekehrt schräg zur Andrückfläche des ersten Werkzeugs ausgerichtet ist.

Damit ist es möglich, in einem Arbeitszug die Folie an den benachbarten Kanten zweier aufeinander folgender Platten abzuschneiden, indem man mit den Werkzeugen entlang der Fuge zwischen den beiden Platten fährt. Hierzu bietet sich eine Ausführung an, bei der die schräge Andrückfläche des ersten Werkzeugs und die schräge Andrückfläche des zweiten Werkzeugs zumindest in einzelnen Betriebsstellungen der Andrückeinheit zusammen eine Keilform ausbilden.

Das zweite Werkzeug kann optional ein, mehrere oder alle der optionalen Ausgestaltungen des ersten Werkzeugs aufweisen. Insbesondere kann
- die Andrückfläche des zweiten Werkzeugs einen Winkel zur Aufnahmeebene ausbilden, der zwischen 25 Gad und 65 Grad, vorzugsweise zwischen 30 Grad und 60 Grad, weiter bevorzugt zwischen 35 Grad und 55 Grad und besonders bevorzugt zwischen 40 Grad und 50 Grad beträgt; und/oder
- das zweite Werkzeug eine um eine zweite Drehachse drehbar gelagerte zweite Rolle sein, wobei die schräge Andrückfläche die Mantelfläche der zweiten Rolle ist; und/oder
- die Mantelfläche der zweiten Rolle kegelförmig ausgebildet sein, d.h. insbesondere mit einer konstanten Neigung; und/oder
- der Rand der kegelförmigen zweiten Rolle im Bereich des größten Durchmessers der zweiten Rolle stumpf ausgeführt sein, und vorzugsweise eine Entgratung und/oder eine Fase und/oder einen Radius aufweisen; und/oder
- die zweite Drehachse zumindest im Wesentlichen parallel zur Aufnahmeebene ausgerichtet sein; und/oder
- zumindest die schräge Andrückfläche des zweiten Werkzeugs aus einem Metall, vorzugsweise aus einem gehärteten Stahl, bestehen; und/oder
- die zweite Rolle aus einem Metall, vorzugsweise aus einem gehärteten Stahl, bestehen.

Die Vorteile dieser optionalen Ausgestaltungen des zweiten Werkzeuges entsprechen sinngemäß denjenigen, die zum ersten Werkzeug beschrieben sind.

Bei einer Ausführungsvariante sind das erste und das zweite Werkzeug benachbart zueinander angeordnet. Damit ist eine kompakte Ausbildung der Abtrennvorrichtung möglich und das Abschneiden mit beiden Werkzeugen gelingt nahezu zeitgleich ohne Verzögerung.

Dabei ist es möglich, dass das erste und das zweite Werkzeug jeweils als Rolle ausgebildet sind, deren Drehachsen in einer Achsebene angeordnet und mit der Andrückeinheit bewegbar sind, die zumindest im Wesentlichen oder exakt senkrecht zur Aufnahmeebene ausgerichtet ist. Damit wird ein gleichzeitiges Schneiden mit den beiden Werkzeugen ermöglicht. Außerdem gleichen sich auf die Antriebseinheit wirkende Kräfte, die über die Kanten der Platten eingeleitet werden, gegenseitig aus.

Gemäß einer speziellen Ausführung sind das erste und das zweite Werkzeug einzeln bewegbar von der Andrückeinheit angetrieben und über die Andrückeinheit an dem Linearantrieb gelagert. Das hat den Vorteil, dass beide Werkzeuge mit einem definierten Anpressdruck an den Kanten benachbarter Platten anliegen können, selbst wenn das Werkzeug nicht exakt mittig zwischen den Kanten positioniert ist. So kann sich der Spalt zwischen zwei Platten nämlich geringfügig weiten, auch asymmetrisch. Eine der Andrückflächen wird in der Folge tiefer in den Spalt fahren müssen als die andere, um einen gleich hohen Anpressdruck zu erreichen. Zudem kann durch den einzelnen Antrieb über die Andrückeinheit auch die Schutzfolie auf zwei unterschiedlich dicken Platten gleichzeitig abgeschnitten werden.

Optional ist es möglich, dass die Andrückeinheit einen ersten Antrieb aufweist, bspw. einen Linearantrieb oder einen Hubzylinder, mit dem die schräge Andrückfläche des ersten Werkzeugs in Richtung auf die Aufnahmeebene zu und/oder von dieser weg bewegbar angetrieben ist. Damit lässt sich beispielsweise die Zustellung und/oder der Anpressdruck ändern. Außerdem kann die erste Andrückfläche gezielt an einer Wunschposition auf die Kante aufgesetzt werden.

Weiterhin kann die Andrückeinheit einen zweiten Antrieb aufweisen, bspw. einen Linearantrieb oder einen Hubzylinder, mit dem die schräge Andrückfläche des zweiten Werkzeugs in Richtung auf die Aufnahmeebene zu und/oder von dieser weg bewegbar angetrieben ist. Die damit verbundenen Vorteile entsprechen sinngemäß denjenigen des ersten Antriebs, wobei insbesondere bei erstem und zweiten Antrieb eine unabhängige Betätigung der zwei Andrückflächen gelingt.

Optional ergänzt kann die Abtrennvorrichtung dadurch sein, dass diese eine Gegenhaltevorrichtung mit einer Stützfläche aufweist, wobei die Gegenhaltevorrichtung auf der dem Linearantrieb gegenüberliegenden Seite der Aufnahmeebene angeordnet ist, und wobei die Stützfläche mit einer Verstelleinheit zumindest bis an die Aufnahmeebene heran bewegbar angetrieben ist. Typische Fördereinrichtungen für Glasplatten bestehen nämlich aus Rollen und Walzen, die tangentiale Stützlinien ausbilden. Eine anliegende Stützfläche gemäß der Gegenhaltevorrichtung erzeugt weniger Spannungen in der Platte und kann zudem näher und präziser an der Kante der Platte angeordnet sein. Durch die Verstelleinheit wird ein Übergleiten der Stützfläche vermieden und die Stützung lässt sich auf den Moment des Abtrennens der Folie beschränken. Weil die Fördereinrichtung meist vergleichsweise große Unebenheiten in der Auflageebene aufweist, bietet es sich an, die Platte im Moment des Schneidens geringfügig an der Kante anzuheben, um eine präzise Ausrichtung zur Linearführung zu erreichen. Der Antrieb zum Heranbewegen der Stützfläche an die Aufnahmeebene kann auch durch eine Bewegung der Fördereinrichtung, bspw. ein Absenken der Stützrollen und/oder-walzen bewirkt sein.

Bei einer besonderen Ausgestaltung ist die Stützfläche durch eine Nut in zwei Teilflächen unterteilt, wobei die Nut parallel zur Bewegungsrichtung des Linearantriebs ausgerichtet ist und in Richtung des Linearantriebs weist. Diese Nut eignet sich dazu, einen Freiraum unter der Schneidzone auszubilden. Gleichzeitig lässt sich die Nut beispielsweise als Empfänger von abgetrennten Folienstücken nutzen. Hierzu sollte das erste und/oder das optionale zweite Werkzeug mit seiner schrägen Andrückfläche der Nut gegenüberliegend angeordnet sein.

Des Weiteren kann die Stützfläche an den freien Enden einer die Nut ausbildenden U-förmigen Schiene ausgebildet sein. Die gesamte Schiene kann so als eine Art Stützbalken genutzt werden, der ein geringes Gewicht und eine hohe Steifigkeit aufweist und gleichzeitig die Nut ausbildet.

Fernerhin kann die Gegenhaltevorrichtung einen Strömungserzeuger aufweisen, der eine Luftströmung entlang der Nut erzeugt. Durch einen Luftstrom lassen sich Abfälle wie Folienstücke und ggf. Mikropartikel einer spröden Kante einer Platte abtransportieren. Ergreift eine Luftströmung einen Folienstreifen, wird er außerdem zuverlässig und definiert von den Andrückflächen weggezogen, wodurch die Schnittzuverlässigkeit erhöht wird.

Vorzugsweise ist der Strömungserzeuger dazu ausgestaltet, einen Unterdruck in der Nut zu erzeugen. Hierdurch werden Schmutz und Abfallprodukte weggesaugt.

Der Strömungserzeuger ist bevorzugt im Bereich eines ersten Endes der Aufnahmeebene an der Nut angeschlossen oder dort angeordnet. Damit ist die Strömung entlang der Nut gleichgerichtet. Optional bildet die Nut im Bereich eines dem ersten Ende der Aufnahmeebene gegenüberliegenden zweiten Ende der Aufnahmeebene eine Einlassöffnung aus, wozu die Nut vorzugsweise endseitig offen ausgestaltet ist. Selbst wenn die Nut vor dem Abtrennen der Folie noch mit Folie und von der Platte überspannt ist, liegt durch die freigelassene Einlassöffnung bereits eine Luftströmung vor, die den Anfang eines abgeschnittenen Folienstreifens sofort ergreift und von der Andrückfläche wegzieht.

Die Erfindung betrifft außerdem eine Kaschiervorrichtung mit einer Abwickeleinheit zum Abwickeln einer Folie von einer Folienrolle, mit einer Andrückeinheit zum Andrücken der abgewickelten Folie auf eine Platte, und mit einer Abtrennvorrichtung wie sie vor- und nachstehend beschrieben ist, wobei die Abtrennvorrichtung (insbesondere prozess- bzw. arbeitsablauftechnisch) hinter der Andrückeinheit angeordnet ist.

Die Kaschiervorrichtung hat den Vorteil, dass kontinuierlich Folie auf aufeinanderfolgende Platten kaschierbar ist, wobei das Abtrennen der Folie an der Kante der Platte besonders einfach, präzise, schnell, kostengünstig und zuverlässig gelingt.

Des Weiteren betrifft die Erfindung eine Glasplattenherstellvorrichtung mit einer Glasschmelzevorrichtung mit der kontinuierlich Flachglas herstellbar ist, mit einer Fördervorrichtung auf der das kontinuierlich hergestellte Flachglas entlang eines Förderpfads liegend weitertransportiert wird, mit einer Ablängeinrichtung im Förderpfad, mit der das kontinuierlich hergestellte Flachglas in Querrichtung in einzelne Platten unterteilt wird, vorzugsweise durch Brechen, und mit einer Kaschiervorrichtung im Förderpfad hinter der Ablängeinrichtung wie sie vor- und nachstehend beschrieben ist.

Vorteilhaft hieran ist, dass mit der Kaschiervorrichtung und der Abtrennvorrichtung ein kontinuierlicher Weitertransport der Platten gelingt, weil nur sehr kurzzeitige Unterbrechungen des Vorschubs einzelner Platten beim Abschneiden der Folie notwendig sind. So genügt es mit der Fördervorrichtung vor der Kaschiervorrichtung kleinere Lücken zwischen den Platten aufzufahren, damit die nachkommenden Platten während des Kaschierens und Abschneidens Platz haben, um sich der Kaschiervorrichtung zu nähern. Pufferspeicher sind so nicht notwendig.

Außerdem betrifft die Erfindung ein Verfahren zum Abtrennen einer auf einer Platte aufkaschierten Folie an einer Kante der Platte umfassend ein Entlangfahren entlang der Kante mit einem ersten Werkzeug, das eine Andrückfläche aufweist, die schräg und tangential auf der Kante der Platte aufsitzt, mit einem auf die Kante wirkenden Anpressdruck, bei dem die Kante durch die Folie hindurchdringt.

Der Vorteil hierbei ist vor allem, dass nicht eine verschleißanfällige, werkzeugseitige Schneide notwendig ist, sondern man sich die Kantenschärfe der Platte zu Nutze macht. Damit entsteht kaum werkzeugseitiger Verschleiß. Gleichzeitig ist der Schnitt stets exakt an der Kante der Platte. Der Vorgang des Entlangfahrens ist zudem schnell und funktioniert zuverlässig. Entsprechend sind in folgenden Verarbeitungsanlagen auch problemlos optische Erfassungen der Position der Platte und von deren Kante möglich. Insbesondere in der Glasfertigung sind zudem die Kanten der Glasplatten noch frisch und eignen sich damit besonders gut als Gegenstück der Andrückfläche.

In einer Variante des Verfahrens wird die Andrückfläche vor dem Entlangfahren an einem Ende der Kante durch eine Querbewegung auf die Kante aufgesetzt. Hierdurch werden Spannungsschäden an der Ecke der Platte vermieden, die beispielsweise bei einem längsgerichteten Anfahren der Platte mit dem Werkzeug entstehen können. Das Werkzeug fährt dann nämlich ähnlich einem Auto auf einen Bordstein auf die Kante der Platte und belastet dabei die Plattenecke.

Besonders zuverlässig und verschleißarm ist das Verfahren, wenn die Andrückfläche des ersten Werkzeugs von einer ersten Rolle ausgebildet ist, wobei die Andrückfläche bei dem Entlangfahren auf der Kante abrollt.

Eine besondere Verfahrensausgestaltung sieht vor, dass um einen Spaltabstand benachbart zur Platte eine weitere Platte angeordnet ist und die Folie auch auf die weitere Platte aufkaschiert ist und den Spaltabstand überbrückt, wobei während dem Entlangfahren des ersten Werkzeugs an der Kante der Platte ein Entlangfahren entlang der Kante der weiteren Platte mit einem zweiten Werkzeug erfolgt, wobei das zweite Werkzeug eine Andrückfläche aufweist, die schräg und tangential auf der Kante der weiteren Platte aufsitzt, mit einem auf die Kante der weiteren Platte wirkenden Anpressdruck, bei dem diese Kante durch die Folie hindurchdringt. Mithin gelingt ein gleichzeitiges Abtrennen der Folie an beiden Platten, wobei der Schnitt auch deshalb sehr zuverlässig gelingt, weil die Folie nicht lose an der Kante herunterhängt oder gar nach oben umgeschlagen ist.

Dabei besteht die Option, dass ein zwischen den Platten entstehender Schnittstreifen der Folie von der Seite der Platten, die dem ersten und zweiten Werkzeug gegenüberliegend angeordnet ist, weggesaugt wird. Dieser Schnittstreifen wird so entsorgt und kann nicht in eine Fördereinrichtung gelangen oder die Weiterbearbeitung der Platte auf sonstige Weise behindern.

Besonders bevorzugt wird das Verfahren ausgeführt, wenn die Platte/n Flachglas und die Kante eine Glaskante ist. Diese Kante ist sind nämlich scharf. Bevorzugt ist die Glaskante eine Bruchkante.

Ferner betrifft die Erfindung ein Verfahren zum Aufkaschieren einer Folie auf eine Platte umfassend ein Abrollen einer Folie von einer Folienrolle während ein dabei abgerollter Bereich der Folie auf eine Platte aufgelegt und an dieser festgeklebt wird, wobei ein abgerollter Bereich der Folie, der in Richtung der Folienrolle weist, bis über eine Kante der Platte ragt, und umfassend die Durchführen eines Verfahrens zum Abtrennen wie es vor- und nachstehend beschrieben ist, um die Folie an dieser Kante abzutrennen. Es gelingt eine schnelle und präzise Abtrennung ohne Überstand.

Alle Vorrichtungsmerkmale lassen sich verfahrensgemäß einsetzen. Umgekehrt können alle verfahrensgemäßen Merkmale funktionaler Bestandteil der Vorrichtungen sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Ausschnitt einer perspektivischen Ansicht einer Abtrennvorrichtung;
- Fig. 2: eine perspektivische Ansicht einer Abtrennvorrichtung;
- Fig. 3: eine erste Seitenansicht einer Abtrennvorrichtung;
- Fig. 4: eine zweite Seitenansicht einer Abtrennvorrichtung;
- Fig. 5: eine Schemaskizze einer Glasplattenherstellvorrichtung; und
- Fig. 6: eine schematische Seitenansicht einer Glasplattenherstellvorrichtung.

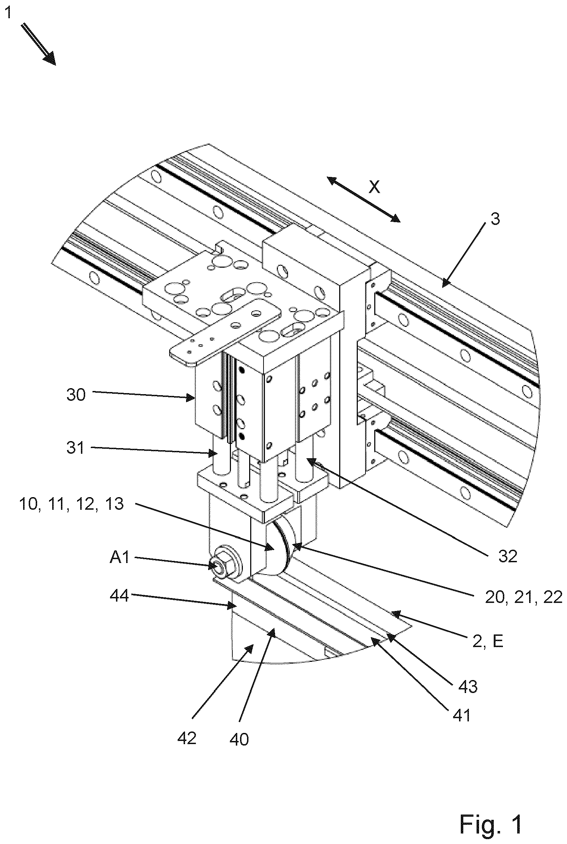

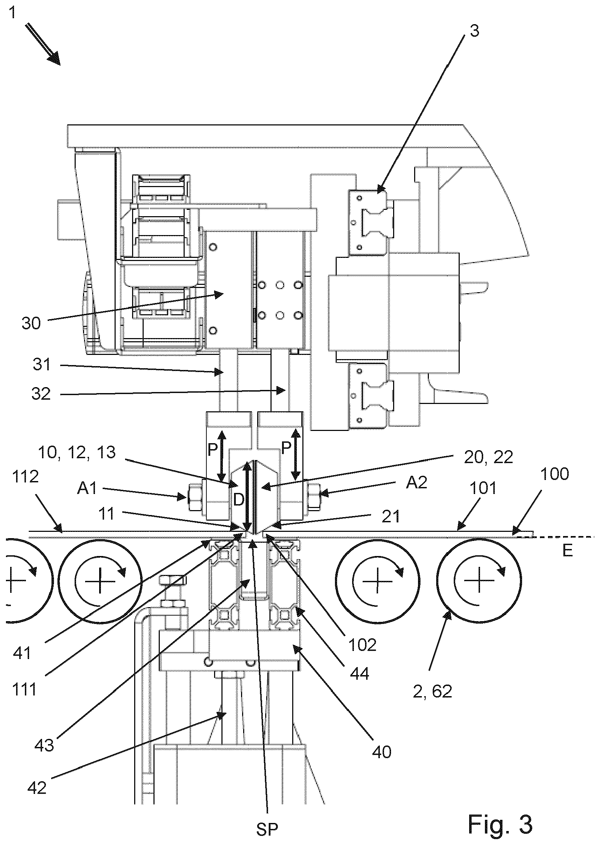

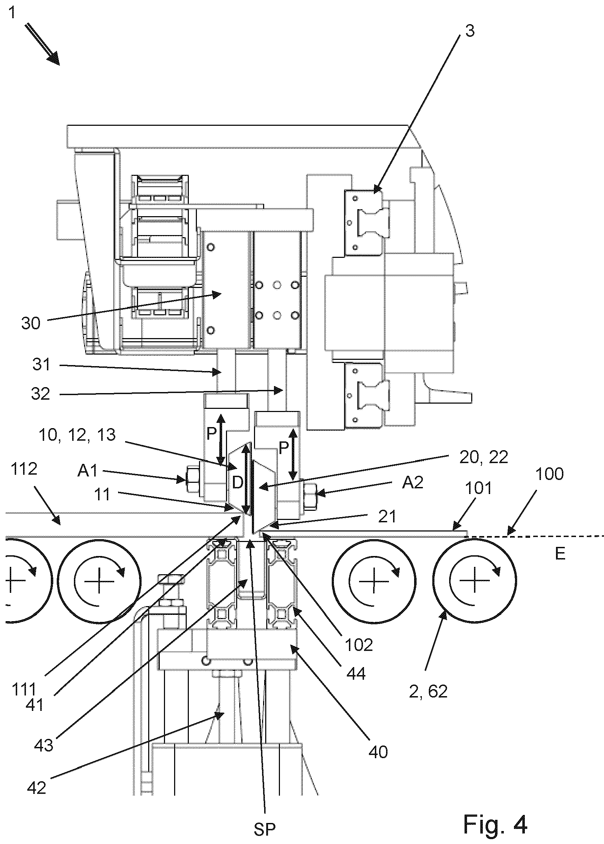

In **Fig. 1** sieht man einen Ausschnitt einer perspektivischen Ansicht einer Abtrennvorrichtung 1. Diese Abtrennvorrichtung 1 verfügt über eine nur angedeutete (vgl. hierzu auch die Fig. 3 und 4) Plattenaufnahme 2 zur Aufnahmen einer Platte (siehe Bezugsziffer (Bz.) 100 in Fig. 3 und 4) in einer Aufnahmeebene E, wobei die Platte eine aufkaschierte Folie aufweist, die bis über eine Kante der Platte hinausragt.

Zudem weist die Abtrennvorrichtung 1 einen Linearantrieb 3 auf, der beabstandet zur Plattenaufnahme 2 angeordnet und dessen Bewegungsrichtung X zumindest im Wesentlichen parallel zur Plattenaufnahme 2 bzw. der Aufnahmeebene E ausgerichtet ist.

Ein erstes Werkzeug 10 und ein zweites Werkzeug 20 sind über eine Andrückeinheit 30 derart bewegbar an dem Linearantrieb 3 gelagert, dass sie jeweils einzeln mit einem definierten und zumindest im Wesentlichen konstanten Anpressdruck P in Richtung der Aufnahmeebene E belastbar bzw. beaufschlagbar sind. Hierzu weist die Andrückeinheit 30 für jedes der Werkzeuge 10, 20 einen Antrieb 31, 32 auf, die jeweils als Hubzylinder ausgebildet sind. Diese können bspw. mit Druckluft oder Öl betrieben werden. Das erste und das zweite Werkzeug 10, 20 sind also einzeln bewegbar von der Andrückeinheit 30 angetrieben und über die Andrückeinheit 30 an dem gemeinsamen Linearantrieb 3 gelagert.

Die beiden Werkzeuge 10, 20 weisen jeweils eine Andrückfläche 11, 21 auf, die schräg zur Aufnahmeebene E ausgerichtet ist, sodass die Andrückfläche 11, 21 mit dem Linearantrieb 3 schräg und tangential zur Aufnahmeebene E und damit an der Kante einer in der Aufnahmeebene E angeordneten Platte 100 entlangfahrbar ist.

Die Andrückfläche 11, 21 des ersten und zweiten Werkzeugs 10, 20 bildet jeweils einen Winkel zur Aufnahmeebene E aus, der zwischen 25 Gad und 65 Grad liegt. Optional kann der Winkel im Speziellen zwischen 30 Grad und 60 Grad, bevorzugt zwischen 35 Grad und 55 Grad und besonders bevorzugt zwischen 40 Grad und 50 Grad betragen.

Dabei ist das erste Werkzeug 10 eine um eine erste Drehachse A1 drehbar gelagerte erste Rolle 12 aus gehärtetem Stahl, wobei die Mantelfläche 13 der ersten Rolle 12 kegelförmig ausgebildet ist und die schräge Andrückfläche 11 ausbildet.

Der Rand der kegelförmigen ersten Rolle 12 ist im Bereich des größten Durchmessers D der ersten Rolle 12 stumpf ausgeführt, indem sie dort einen kleinen Radius aufweist. Die erste Drehachse A1 ist parallel zur Aufnahmeebene E ausgerichtet.

Das zweite Werkzeug 20 ist benachbart zum ersten Werkzeug 10 angeordnet sowie spiegelverkehrt ausgebildet. Hierdurch ist die Andrückfläche 21 des zweiten Werkzeugs 20 umgekehrt schräg zur Andrückfläche 11 des ersten Werkzeugs 10 ausgerichtet. Dadurch bilden die schrägen Andrückflächen 11, 21 zumindest in der dargestellten Betriebsstellung der Andrückeinheit 30 zusammen eine Keilform aus. Das gilt auch für die Darstellung nach Fig. 3. In Fig. 4 trifft dies nicht mehr zu, weil die Drehachsen A1 und A2 unterschiedlich weit entfernt von der Aufnahmeebene E angeordnet sind. Die Drehachsen A1, A2 sind in einer Achsebene angeordnet und mit der Andrückeinheit 30 in dieser Achsebene bewegbar, wobei die Achsebene senkrecht zur Aufnahmeebene E ausgerichtet ist.

Des Weiteren verfügt die Abtrennvorrichtung 1 über eine Gegenhaltevorrichtung 40 mit einer Stützfläche 41, die auf der dem Linearantrieb 3 gegenüberliegenden Seite der Aufnahmeebene E angeordnet ist. Diese Stützfläche 41 ist mit einer Verstelleinheit 42 zumindest bis an die Aufnahmeebene E heran bewegbar angetrieben. Die Stützfläche 41 ist durch eine Nut 43 in zwei Teilflächen unterteilt, wobei die Nut 43 parallel zur Bewegungsrichtung X des Linearantriebs 3 ausgerichtet ist und in Richtung des Linearantriebs 3 weist. Das erste und das zweite Werkzeug 10, 20 sind mit ihren schrägen Andrückfläche 11, 21 der Nut 43 gegenüberliegend angeordnet. Die Stützfläche 41 ist an den freien Enden einer die Nut 43 ausbildenden U-förmigen Schiene 44 ausgebildet.

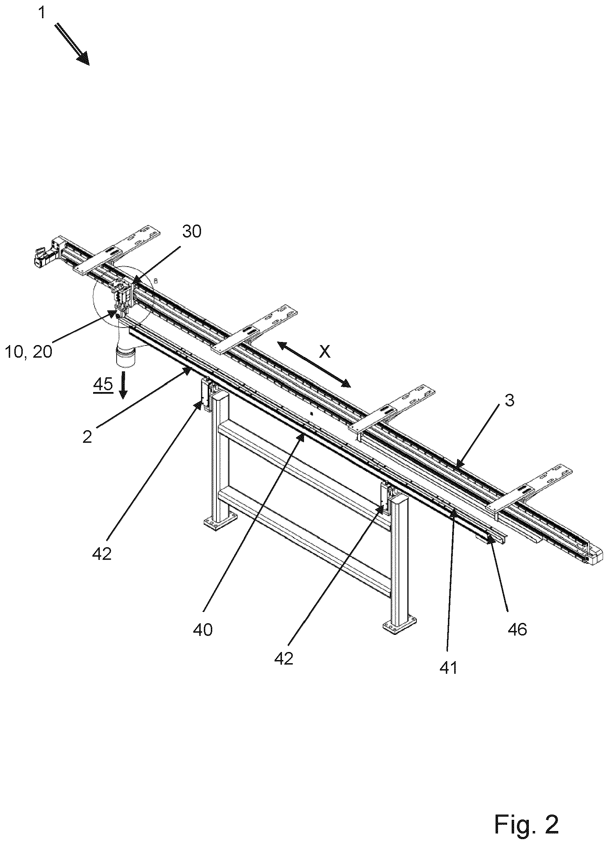

Der von Fig. 1 dargestellte Ausschnitt ist in Fig. 2 gekennzeichnet. Die Ausführungen zu Fig. 1 treffen daher vollumfänglich auf Fig. 2 zu. Zusätzlich lässt sich vor allem in Fig. 2 erkennen, dass die Gegenhaltevorrichtung 40 einen Strömungserzeuger 45 aufweist, der eine Luftströmung entlang der Nut 43 durch Unterdruck erzeugt. Der Strömungserzeuger 45 ist über einen trichterförmigen Anschluss an der Unterseite der U-förmigen Schiene 44 angeschlossen. Die Nut 43 wird auf dieser Seite der U-förmigen Schiene 44 möglichst vollständig geschlossen, was auch mit Hilfe einer aufgelegten Platte und der Folie erfolgen kann, damit der Unterdruck möglichst ausschließlich eine Luftströmung von der gegenüberliegenden Seite der U-förmigen Schiene 44 bewirkt. An dem gegenüberliegenden zweiten Ende der U-förmigen Schiene 44 ist eine Einlassöffnung 46 ausgebildet, wozu die Nut 43 beispielsweise einfach endseitig offen ausgestaltet ist.

In den Seitenansichten der **Fig. 3** **und** **4** sieht man nunmehr die Funktionsweise der Abtrennvorrichtung nach den Fig. 1 und 2. Hier ist die Plattenaufnahme 2 um ein Rollensystem ergänzt dargestellt, das gleichzeitig eine Fördervorrichtung 62 ausbildet. Mit der Fördervorrichtung 62 wird eine Platte 100, 112 nach der anderen mit den Kanten 102, 111 in den Bereich oberhalb der Gegenhaltevorrichtung 40 bewegt. Diese fährt dann die Stützfläche 41 von unten gegen die Platten 100, 112 und hebt diese optional auch leicht an.

Anschließend setzen die Werkzeuge 10, 20 auf die um einen Spaltabstand SP benachbart angeordneten Platten 100, 112 auf, bevor der Linearantrieb 3 dafür sorgt, dass sie mit ihren Andrückflächen 11 schräg und tangential an der Kante 102, 111 der Platten 100, 112 entlanggefahren werden. Sobald der Spaltabstand SP nicht mittig unter den Werkzeugen 10, 20 positioniert ist, schräg ausgerichtet ist, oder seine Breite ändert, gleichen die unabhängigen Antriebe 31, 32 der Andrückeinheit 30 dies aus, wobei dann die Drehachsen A1, A2 Parallelverschiebungen zur Aufnahmeebene E erfahren und bei Bedarf auch nicht mehr koaxial zueinander ausgerichtet sind. So ist beispielsweise in Fig. 4 der Sonderfall eines Glasdickenwechsels dargestellt, der mit den unabhängigen Antrieben 31, 32 der Andrückeinheit 30 ebenfalls ausgleichbar ist. Aufgrund der Breite der Rollen 12, 22 und der konstanten Steigung von deren Andrückflächen 11, 21 kann der tangentiale Auflagepunkt über die Breite der Rollen 12, 22 wandern, ohne dass sich die schneidtechnisch relevanten Parameter wie Anpressdruck und Anstellwinkel der Andrückfläche 11, 21 verändern.

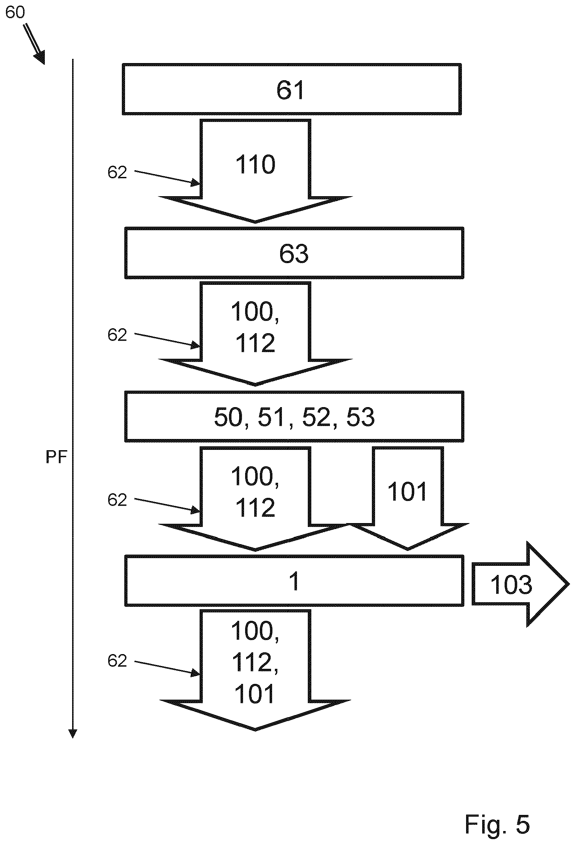

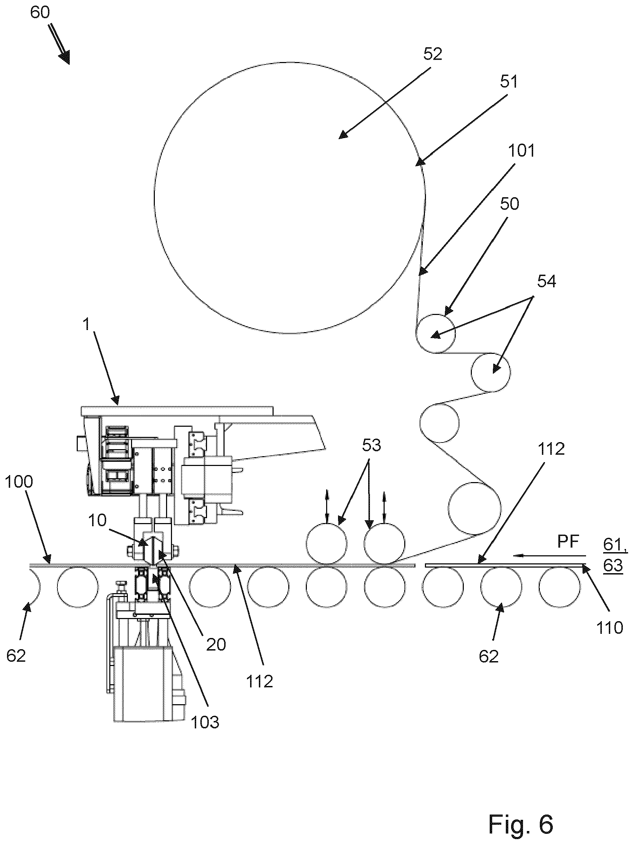

**Fig. 5** zeigt eine Schemaskizze einer Glasplattenherstellvorrichtung 60 und **Fig. 6** eine schematische Seitenansicht einer solchen Glasplattenherstellvorrichtung 60. Die Fig. 5 und 6 werden daher zusammen beschrieben. Der Prozess erfolgt entlang eines Förderpfads PF und startet mit einer Glasschmelzevorrichtung 61 (in Fig. 6 nur angedeutet als Position am Beginn des sichtbaren Förderpfads) in der Glasschmelze erzeugt wird, aus der dann in einem Floatglasprozess auf einem Zinnbad kontinuierlich Flachglas 110 hergestellt wird. Dieses Band aus Flachglas 110 wird mit einer Fördervorrichtung 62 von dem Zinnbad weggeleitet. Nach gezielten Abkühl- und Temperierungen des ununterbrochenen Bandes aus Flachglas 110 wird dieses einer Ablängeinrichtung 63 (in Fig. 6 nur angedeutet als Position am Beginn des sichtbaren Förderpfads) zugeführt. Nach Anritzen der Oberfläche des Flachglases 110 in Querrichtung des Bandes wird bspw. durch leichtes Anheben ein gezielter Bruch des Flachglases 110 entlang dem Ritz herbeigeführt und es entsteht eine Platte 100, 112 nach der anderen. Diese Platten 100, 112 werden hintereinanderliegend mit der Fördervorrichtung 62 weitertransportiert. Jetzt können weitere Veredelungsschritte erfolgen, die bereits plattenweise individualisiert sein können. Im Besonderen können dies beispielsweise Beschichtungsverfahren und Härteverfahren sein, wobei immer auch Reinigungsschritte zwischengeschaltet sein können.

Schließlich erreichen die Platten 100, 112 mit der Fördervorrichtung 62 eine Kaschiervorrichtung 50. Diese weist eine Abwickeleinheit 51 auf, bei der Folie 101 von einer Folienrolle 52 abgerollt wird. Diese Folie 101 wird nach Passieren einiger optionaler Umlenkrollen 54 kontinuierlich mit einer Andrückeinheit 53 auf die Platten 100, 112 gezogen und auf diesen festgeklebt.

Sodann schließt sich eine Abtrennvorrichtung 1, wie sie in den Fig. 1 bis 4 angegeben ist, an. Dort erfolgt ein Entlangfahren entlang den Kanten 102, 111 der Platten 100, 112 mit dem ersten und zweiten Werkzeug 10, 20, bei dem die Kanten 102, 111 durch die Folie 101 hindurchdringen. Weil die Folie 101 zuvor, wie in den Fig. 3 und 4 gezeigt, einen Spaltabstand SP zwischen den Platten 100, 112 überbrückt, entsteht während dem Entlangfahren ein Schnittstreifen 103 der Folie 101. Dieser wird gemäß dem Schema nach Fig. 5 von den Platten 100, 112 mit der aufgeklebten Folie 101 entfernt, was gemäß Fig. 2 mit dem Strömungserzeuger 45 geschieht. Der Schnittstreifen 103 wird insbesondere von der Seite der Platten 100, 112, die dem ersten und zweiten Werkzeug 10, 20 gegenüberliegend angeordnet ist, weggesaugt.

Die Erfindung ist nicht auf eine der vorbeschriebenen Ausführungsformen beschränkt, sondern in vielfältiger Weise abwandelbar.

Die Angaben "im Wesentlichen" soll zumindest Ausführungen erfassen, bei denen vom zugrundeliegende exakten Wert um maximal 8 % abgewichen wird. Auch der exakte Wert soll als explizit offenbart angesehen werden.

Die Angabe "wenigstens" bedeuten im Rahmen dieser Schrift, dass einerseits der zugrundeliegende exakte Wert explizit offenbart ist, als auch andererseits die Werte, die den exakten Werte ganzzahlig um eins, zwei oder drei erhöhen. Alle weiteren Werte über dem zugrundeliegende exakte Wert sind zumindest implizit offenbart und erfasst.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Abtrennvorrichtung | | |
| 2 | Plattenaufnahme | 60 | G lasplattenherstellvorrichtung |
| 3 | Linearantrieb | 61 | Glasschmelzevorrichtung |
| | | 62 | Fördervorrichtung |
| 10 | erstes Werkzeug | 63 | Ablängeinrichtung |
| 11 | Andrückfläche | | |
| 12 | erste Rolle | 100 | Platte |
| 13 | Mantelfläche (erste Rolle) | 101 | Folie |
| | | 102 | Kante |
| 20 | zweites Werkzeug | 103 | Schnittstreifen |
| 21 | Andrückfläche | | |
| 22 | zweite Rolle | 110 | Flachglas |
| | | 111 | Kante |
| 30 | Andrückeinheit | 112 | weitere Platte |
| 31 | erster Antrieb | | |
| 32 | zweiter Antrieb | A1 | erste Drehachse (erste Rolle) |
| | | A2 | zweite Drehachsen (zweite Rolle) |
| 40 | Gegenhaltevorrichtung | D | Durchmessers (erste Rolle) |
| 41 | Stützfläche | E | Aufnahmeebene |
| 42 | Verstelleinheit | P | Anpressdruck |
| 43 | Nut | PF | Förderpfad |
| 44 | U-förmige Schiene | SP | Spaltabstand |
| 45 | Strömungserzeuger | X | Bewegungsrichtung (Linearantrieb) |
| 46 | Einlassöffnung | | |
| 50 | Kaschiervorrichtung | | |
| 51 | Abwickeleinheit | | |
| 52 | Folienrolle | | |
| 53 | Andrückeinheit | | |
| 54 | Umlenkrolle | | |

## Patentansprüche

1. **Abtrennvorrichtung** (1) mit
- einer Plattenaufnahme (2) zur Aufnahmen einer Platte (100) in einer Aufnahmeebene (E);
- einem Linearantrieb (3), der beabstandet zur Plattenaufnahme (2) angeordnet und dessen Bewegungsrichtung (X) zumindest im Wesentlichen parallel zur Plattenaufnahme (2) ausgerichtet ist; und
- einem ersten Werkzeug (10), das über eine Andrückeinheit (30) derart bewegbar an dem Linearantrieb (3) gelagert ist, dass es in Richtung der Aufnahmeebene (E) belastbar und/oder belastet ist;
- wobei das erste Werkzeug (10) eine Andrückfläche (11) aufweist, die schräg zur Aufnahmeebene (E) ausgerichtet ist.

2. Abtrennvorrichtung (1) gemäß Anspruch 1, **dadurch gekennzeichnet, dass** das erste Werkzeug (10) eine um eine erste Drehachse (A1) drehbar gelagerte erste Rolle (12) ist, wobei die schräge Andrückfläche (11) die Mantelfläche (13) der ersten Rolle (12) ist.

3. Abtrennvorrichtung (1) gemäß Anspruch 2, **dadurch gekennzeichnet, dass** die Mantelfläche (13) der ersten Rolle (12) kegelförmig ausgebildet ist.

4. Abtrennvorrichtung (1) gemäß Anspruch 3, **dadurch gekennzeichnet, dass** der Rand der kegelförmigen ersten Rolle (12) im Bereich des größten Durchmessers (D) der ersten Rolle (12) stumpf ausgeführt ist.

5. Abtrennvorrichtung (1) gemäß einem der Ansprüche 2 bis 4, **dadurch gekennzeichnet, dass** die erste Drehachse (A1) zumindest im Wesentlichen parallel zur Aufnahmeebene (E) ausgerichtet ist.

6. Abtrennvorrichtung (1) gemäß einem der vorhergehenden Ansprüche, **dadurch gekennzeichnet, dass** zumindest die schräge Andrückfläche (11) des ersten Werkzeugs (10) aus einem Metall besteht.

7. Abtrennvorrichtung (1) gemäß einem der vorhergehenden Ansprüche, **dadurch gekennzeichnet, dass** ein zweites Werkzeug (20) derart über die Andrückeinheit (30) an dem Linearantrieb (3) gelagert ist, dass es in Richtung der Aufnahmeebene (E) belastbar und/oder belastet ist, wobei das zweite Werkzeug (20) eine Andrückfläche (21) aufweist, die schräg zur Aufnahmeebene (E) ausgerichtet ist, und wobei die Andrückfläche (21) des zweiten Werkzeugs (20) umgekehrt schräg zur Andrückfläche (11) des ersten Werkzeugs (10) ausgerichtet ist.

8. Abtrennvorrichtung (1) gemäß Anspruch 7, **dadurch gekennzeichnet, dass** das erste und das zweite Werkzeug (10, 20) einzeln bewegbar von der Andrückeinheit (30) angetrieben und über die Andrückeinheit (30) an dem Linearantrieb (3) gelagert sind.

9. Abtrennvorrichtung (1) gemäß einem der vorhergehenden Ansprüche, **dadurch gekennzeichnet, dass** diese eine Gegenhaltevorrichtung (40) mit einer Stützfläche (41) aufweist, wobei die Gegenhaltevorrichtung (40) auf der dem Linearantrieb (3) gegenüberliegenden Seite der Aufnahmeebene (E) angeordnet ist, und wobei die Stützfläche (41) mit einer Verstelleinheit (42) zumindest bis an die Aufnahmeebene (E) heran bewegbar angetrieben ist.

10. Abtrennvorrichtung (1) gemäß Anspruch 9, **dadurch gekennzeichnet, dass** die Stützfläche (41) durch eine Nut (43) in zwei Teilflächen unterteilt ist, wobei die Nut (43) parallel zur Bewegungsrichtung (X) des Linearantriebs (3) ausgerichtet ist und in Richtung des Linearantriebs (3) weist.

11. Abtrennvorrichtung (1) gemäß einem der Ansprüche 9 oder 10, **dadurch gekennzeichnet, dass** die Gegenhaltevorrichtung (40) einen Strömungserzeuger (45) aufweist, der eine Luftströmung entlang der Nut (43) erzeugt.

12. **Kaschiervorrichtung** (50) mit einer Abwickeleinheit (51) zum Abwickeln einer Folie (101) von einer Folienrolle (52), einer Andrückeinheit (53) zum Andrücken der abgewickelten Folie (101) auf einer Platte (100) und mit einer Abtrennvorrichtung (1) gemäß einem der vorhergehenden Ansprüche, die hinter der Andrückeinheit (53) angeordnet ist.

13. **Glasplattenherstellvorrichtung** (60) mit
- einer Glasschmelzevorrichtung (61) mit der kontinuierlich Flachglas (110) herstellbar ist,
- einer Fördervorrichtung (62) auf der das kontinuierlich hergestellte Flachglas (110) entlang eines Förderpfads (PF) liegend weitertransportiert wird;
- einer Ablängeinrichtung (63) im Förderpfad (PF), mit der das kontinuierlich hergestellte Flachglas (110) in Querrichtung in einzelne Platten (100, 112) unterteilt wird;
- einer Kaschiervorrichtung (50) im Förderpfad (PF) hinter der Ablängeinrichtung (63) gemäß Anspruch 12.

14. **Verfahren** zum Abtrennen einer auf einer Platte (100) aufkaschierten Folie (101) an einer Kante (102) der Platte (100) umfassend den folgenden Schritt:
- Entlangfahren entlang der Kante (102) mit einem ersten Werkzeug (10), das eine Andrückfläche (11) aufweist, die schräg und tangential auf der Kante (102) der Platte (100) aufsitzt, mit einem auf die Kante (102) wirkenden Anpressdruck (P), bei dem die Kante (102) durch die Folie (101) hindurchdringt.

15. Verfahren gemäß Anspruch 14, **dadurch gekennzeichnet, dass** die Andrückfläche (11) des ersten Werkzeugs (10) von einer ersten Rolle (12) ausgebildet ist, wobei die Andrückfläche (11) bei dem Entlangfahren auf der Kante (102) abrollt.

16. Verfahren gemäß einem der Ansprüche 14 oder 15, **dadurch gekennzeichnet, dass** um einen Spaltabstand (SP) benachbart zur Platte (100) eine weitere Platte (112) angeordnet ist und die Folie (101) auch auf die weitere Platte (112) aufkaschiert ist und den Spaltabstand (SP) überbrückt, wobei während dem Entlangfahren des ersten Werkzeugs (10) an der Kante (102) der Platte (100) ein Entlangfahren entlang der Kante (111) der weiteren Platte (112) mit einem zweiten Werkzeug (20) erfolgt, wobei das zweite Werkzeug (20) eine Andrückfläche (21) aufweist, die schräg und tangential auf der Kante (111) der weiteren Platte (112) aufsitzt, mit einem auf die Kante (111) der weiteren Platte (112) wirkenden Anpressdruck, bei dem diese Kante (111) durch die Folie (100) hindurchdringt.

17. **Verfahren** zum Aufkaschieren einer Folie (101) auf eine Platte (100) umfassend die folgenden Schritte:
- Abrollen einer Folie (101) von einer Folienrolle (52) während ein dabei abgerollter Bereich der Folie (101) auf eine Platte (100) aufgelegt und an dieser festgeklebt wird, wobei ein abgerollter Bereich der Folie (101), der in Richtung der Folienrolle (52) weist, bis über eine Kante (102) der Platte (100) ragt;
- Durchführen eines Verfahrens zum Abtrennen gemäß einem der Ansprüche 14 bis 16, um die Folie (101) an dieser Kante (102) abzutrennen.
